# EUROPEAN PATENT SPECIFICATION

(11) **EP 2 375 947 B1**
(45) Date of publication and mention of the grant of the patent: **10.10.2012**
(21) Application number: 09807507.0
(22) Date of filing: 29.12.2009
(51) Int. Cl.: A47J 37/12

(54) **AUTOMATIC FRYER PROVIDED WITH A REGENERATION SYSTEM FOR COOKING OIL**
AUTOMATISCHE FRITEUSE MIT EINEM REGENERIERUNGSSYSTEM FÜR SPEISEÖL
FRITEUSE AUTOMATIQUE MUNIE D'UN SYSTÈME DE RÉGÉNÉRATION POUR HUILE DE CUISSON

(30) Priority: 30.12.2008 IT RM20080698
(43) Date of publication of application: 19.10.2011
(73) Proprietor: Testa, Giuseppe, 04011 Aprilia (LT) (IT)
(72) Inventor: Testa, Giuseppe, 04011 Aprilia (LT) (IT)
(74) Representative: Santi, Filippo
(86) International application number: PCT/IT2009/000587
(87) International publication number: WO 2010/076839

(56) References cited:
- EP-A2- 0 333 164
- US-A- 3 368 682
- US-A- 3 608 472
- US-A- 4 768 426
- US-A- 5 247 876

## Description

The present invention concerns an automatic fryer provided with a regeneration system for cooking oil.

The invention refers to the field of restoration and more in particular to the field of apparatuses for frying food on an industrial scale or within retail sale stores, such as for example restaurants or firm's refectories.

Still more in particular, the invention refers to the sector of food cooking by means of vegetal oil.

It is known that, even if extra virgin olive oil is unanimously acknowledged as the best vegetal fat, its production, commerce and consumption remains marginal with respect to other vegetable oils. On the basis of recent studies it is possible to say that the production of all olive oils, comprised also rectified oil, represents only 2,3% of all the other vegetable fats.

Further, if medium- and long-term forecasts computed by the International oil counsel are right, the world production of olive oil is lower than the average increase of the global production of seed oil, the annual production of olive oils being equal to 2,5 million of tons against 110 million of tons for seeds oil.

First projections show the feasibility of a significant increase of the world production of cereals for the year 2008/09, but international prices remain at record levels for most cereals while is still increasing for others.

Despite the unprecedented world harvests of the last season, the request for cereals is strong and continuous, and keeps high the pressure over international prices.

In this general perspective context, and because of the transformation of the raw material in vegetable oils, is present the need and possibility of offering a solution allowing for the maintenance, regeneration and purification by means of a mechanical treatment of the oil already in commerce.

In particular, the invention refers to the treatment of seeds vegetable oils with high oleic content, such as for example but not limited to: peanut, sunflower, maize or soybean, and refers to the cycle starting from a milestone: the treatment of seeds or olive oils produced and known by intervening in the step following cooking, or a series of cooking cycles, the oils are submitted to, by means of the depuration of oil in terms of colour, residual scum burned during cooking, viscosity, certain cleaning of food residuals, removal of tastes, in order to allow for reusing oil different times before disposal.

Further, the invention also refers to the respect of the oil organoleptic quality by means of the correct use and respect of the known parameters of cooking temperature, for example preventing reaching or overcoming the typical smoke point of each oil during cooking.

In this context is entered the solution according to the present invention, with the aim of providing a method for frying and regeneration of cooking oil and an automatic fryer provided with a regeneration system for cooking oil.

The purpose of the present invention is therefore that of proposing a fryer allowing for overcoming the limits of the solutions according to the prior art and obtaining the previously described technical results.

A further aim of the invention is that said fryer can be realised with costs substantially low, as far as both the production costs and the managing costs is concerned.

Not least aim of the invention is that of providing a fryer that is substantially simple, safe and reliable.

It is therefore a first specific object, not being part of the present invention such as claimed, a method for frying and regeneration of cooking oil comprising the following steps:
- controlling cooking oil temperature preventing it from increasing up to or above the smoke point,
- intermittently filtering oil to remove residues of cooking food, and subsequent reuse for cooking,
   followed with a less frequent intermittent rate by
- disposal of cooking oil.

Preferably, said step of intermittently filtering oil is composed of a first raw filtering step and a second refining step.

Alternatively, said step of intermittently filtering oil is composed of:
- intermittently raw filtering oil to remove residues of cooking food, and subsequent reuse for cooking,
   followed with a less frequent intermittent rate by
- intermittently refining filtering oil after a plurality of frying cycles, with a closer mesh sieve, and subsequent reuse for cooking.

Preferably, said method for frying and regeneration of cooking oil further comprises the following step:
- ultra filtering oil, by repeatedly performing a filtering step before reusing oil for cooking.

It is further a specific object of the present invention an automatic fryer such as defined in claim 1.

A prior art figure according to the preamble of claim 1 is known from document US 3368682 A.

Preferably, according to the invention, downstream said delivery conduit a three-way valve is provided, connected to a first conduit for recycling to said tank and to a second conduit provided with a first filter for raw filtering and a second filter for refining and subsequently followed by a collection tank and by a conduit for recycling to said pump.

Alternatively, according to the invention, downstream said delivery conduit is provided a first conduit connected to a conduit for recycling to said tank, a second conduit con a filter for raw filtering, followed by a three-way valve connected to said conduit for recycling to said tank and to a conduit comprising a filter for refining, or to a conduit for direct connection to said conduit comprising said filter for refining, said conduit being subsequently followed by a collection tank and by a conduit for recycling to said pump.

Lastly, according to the invention, said automatic fryer provided with a regeneration system for cooking oil comprises a PLC for controlling the management of any set performing step.

It is evident the efficacy of the method and of the fryer of the present invention, allowing for obtaining a significant saving and cheapness in daily use of frying oil, and representing for final users, such as for example but not limited to packaged food producers but also restaurateurs, a solution allowing for the exploitation of raw material, such as vegetable oils for cooking, up to maximum maintenance of its organoleptic features.

In particular, the first positive answer for the market is that of immediate cheapness. It is immediately intuitable the economic saving that can be obtained thanks to the present invention. It is sufficient to think that, if a cycle of cooking or frying cycles constantly become exhausted, depending from the quality of the used oil, within 3-4 cooking cycles, the method and fryer of the present invention allow for extending life cycle of a vegetable oil batch of at least as many cooking cycles.

Further, an evident advantage of the invention, also being a purpose of the method and of the fryer of the invention, is that of granting for the respect of a way of cooking food that can be defined traditional, consisting in controlling the life and integrity of oils, until today entrusted to the experience of the chef, evaluating first the colour, viscosity, smell, all being variable elements not easy to assess.

It is sufficient to think to all those cases in which, especially in little restaurants as well as pizza-restaurants and rotisserie, for evident reasons of cost and time, the same cooking oil is used for different aliments, with plain detriment of quality and tastes.

On the contrary, the solution according to the present invention allows for respecting the oil organoleptic features, in particular also by means of the correct use and respect of the specific known cooking temperature parameters. In this context, in particular the solution according to the present invention prevents from overcoming the smoke point of some vegetable oils, such as for example: sunflower oil (less than 130°C), soybean oil (130 °C), maize oil (160°C), peanut oil (180 °C), extra-virgin olive oil (210°C), coconut oil (177 °C), refined palm oil (240°C), lard (more than 260 °C). In fact, it is certified that oils stressed beyond these temperatures change their features producing substantial changes of their organoleptic quality. For informative purposes, it must be noted that refined vegetable oils have a higher smoke point with respect to non refined one and therefore are more suitable for frying.

In all the previously explained cases, a method for frying and regeneration of cooking oil and an automatic fryer provided with a regeneration system for cooking oil as the one of the present invention allow, by means of a real clearing in real time (3 minutes for 20 litres of oil), for obtaining a depuration of oil in terms of: colour, residues of cooking burned scum, viscosity, sure cleaning of food residues, removal of tastes.

The present invention will now be described, for illustrative, non limitative purpose, according to a preferred embodiment, in particular with reference to the figures of the enclosed drawings, wherein
- figure 1 shows a functional block diagram of an automatic fryer provided with a regeneration system for cooking oil according to a first embodiment of the present invention, and
- figure 2 shows a functional block diagram of an automatic fryer provided with a regeneration system for cooking oil according to a second embodiment of the present invention.

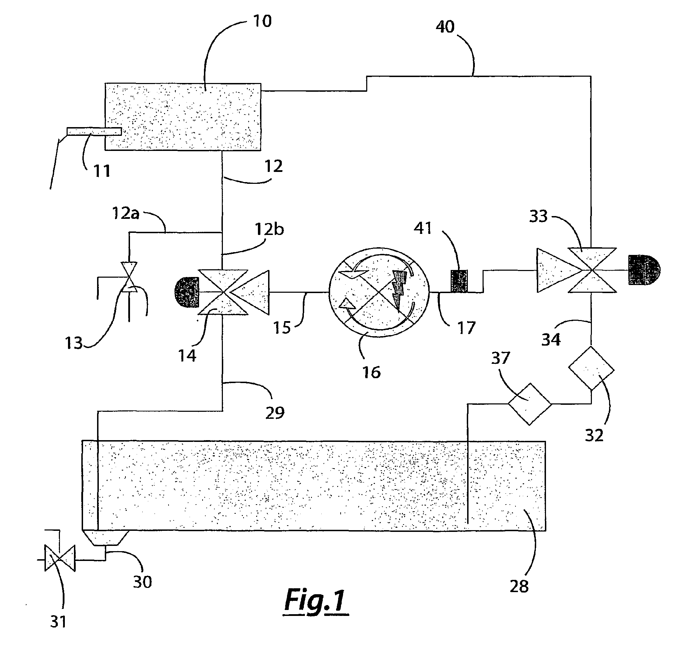

Reference being made preliminarily to figure 1, with the numeral 10 is shown the fryer oil tank, wherein is plunged a temperature control unit 11, connected to a cooking oil temperature control device (not shown) provided with means for selecting the kind of oil that is being used and means for controlling the frying temperature according to the selected kind of oil.

From the bottom of tank 10, an outlet conduit 12 splits into a branch 12a for disposal, on which is present a valve 13 and a recycling branch 12b leading to a three-way valve 14. From the three-way valve 14, a conduit 15 leads to a pump 16 forwarding the fluid passing through it to a delivery conduit 17 along which a security manostat 41 is present. Downstream the security manostat 41, the delivery conduit 17 arrives to a three-way valve 33, splitting the flow into a conduit 40, going back to the fryer oil tank 10 and a conduit 34, along which are present in sequence a filter 32 for raw filtering and a filter 37 for refining. The conduit 34 then arrives to a collecting tank 28 wherein is also dipped a conduit 29 for taking back oil to the inlet of the pump 16, by means of the three-way valve 14 and the conduit 15. The collecting tank 28 is also provided with a conduit for disposal 30 provided with a valve 31.

The circuit described above can operate according to different operative modes, depending on the treatment the oil must be subject.

In particular, according to a first operative mode, called complete regeneration, it is possible to regenerate oil after each frying cycle or after a classic series of frying cycles; in practice, instead of disposing oil, it is performed this operative mode and the frying cycle is activated again, until a number of regenerations that can vary between 4 and 8 steps of regeneration depending on the quality of the oil used.

The oil of the fryer, by means of the three-way valve 14, arrives to the pump 16 and is delivered, by means of the three-way valve 33, through the conduit 34, to the first step of filtration (filter 32 for raw filtering) and subsequently to the second step of filtration (filter 37 for refining), arriving to the collecting tank 28.

According to this operative mode valves 13 and 31 are shut, the temperature control unit 11 is excluded, the security manostat 41 is active, for the detection of a possible obstruction.

This step is followed by a step of restoration of the filtered oil, allowing for taking back filtered oil directly to the fryer tank 10.

In this operative mode, oil from the collecting tank 28, by means of the three-way valve 14, arrives to the pump 16 and by means of the three-way valve 33, delivered to the conduit 40 and, through it, directly goes back to fryer tank 10.

In this step, valves 13 and 31 are shut, the temperature control unit 11 is active, as also the manostat 41 for detecting a possile obstruction.

According to a second operative mode, called ultra-filtration, in order to remove the most persistent smell, for example in order to allow for cooking fish with the same oil of chips, the oil from the fryer tank 10, after arriving to the collecting tank 28, by means of the three-way valve 14, arrives to the pump 16, passing through the three-way valve 33, and again through the filter 32 for raw filtering and through refining filter 27, arriving again to the collecting tank 28.

In this step valves 13 and 31 are shut, the temperature control unit 11 is not active while the security manostat 41 for the detection of a possible obstruction of the filter 32 for raw filtering or the filter 37 for refining is active. If an obstruction is obstruction detected by the manostat 41, the filter 32 for raw filtering and the filter 37 for refining can be cleaned, also by hand.

The ultra-filtration mode can be repeated more times, before being followed by the step of filtered oil restoration, allowing for taking back filtered oil directly to the fryer tank 10 according to the already disclosed operative modes.

Last, the operative mode of oil disposal allows for removing, after all cycles are finished, oil from fryer and delivering it to disposal.

In this step, the oil of the fryer, by means of valve 13, falling down, is collected in a suitable container (not shown) and disposed. Further, in this step, the collecting duct for the deposits of the collecting tank 28 is emptied by hand.

In this step, valves 14, 33 and 31 are shut, electropump 16 is switched off, the temperature control unit 11 and the security manostat 41 are not active.

The whole apparatus is assisted by a control system comprising a redundant PLC system, managing all the set operative steps.

Set programs control operative cycles and security controls needed for a normal cooking. The fryer with controlled electric heating or methane/gas heating, manages, without any possibility of setting error, the cooking temperature.

The user is only requested for setting by means of a keyboard the cycle with the used oil, this parameter being constantly controlled by the PLC by means of the temperature control unit 11. Parameters, already set in the PLC, are as many as the possibly used vegetable oils.

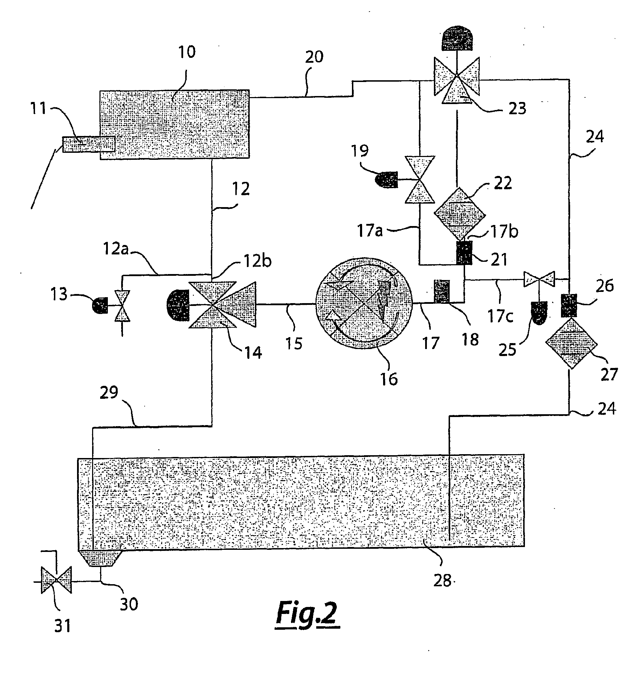

Reference being made to figure 2, wherein, for the elements in common with the embodiment of figure 1 the same numeric reference will be used of figure 1, the numeral 10 showing the fryer oil tank, wherein a temperature control unit 11 is plunged, connected to a cooking oil temperature control device (not shown) provided with means for selecting the kind of oil that is being used and means for controlling the frying temperature according to the selected kind of oil.

From the bottom of the tank 10, an outlet conduit 12 splits into a branch 12a for disposal, on which a valve 13 is present and a recycling branch 12b leading to a three-way valve 14. From the three-way valve 14, a conduit 15 leads to a pump 16 forwarding the fluid passing through it to a delivery conduit 17 on which a flow switch 18 is present. Downstream the flow switch 18, the delivery conduit 17 splits into three branches 17a, 17b and 17c.

Branch 17a, on which a valve 19 is positioned, leads to a conduit 20, going back to the fryer oil tank 10.

Along the branch 17b are positioned in sequence a manostat 21, a filter 22 for raw filtering and a three-way valve 23, splitting the flow into a conduit 24 and the conduit 20, going back to the fryer oil tank 10.

The branch 17c, along which a valve 25 is positioned, leads to the same conduit 24.

Along the conduit 24, downstream both the three-way valve 23 and the branch 17c, are positioned in sequence a manostat 26 and a refining filter 27. The conduit 24 ends in a collecting tank 28 wherein a conduit 29 starts for the oil going back to the pump 16, by means of the three-way valve 14 and the conduit 15. The collecting tank 28 is lastly provided with a conduit 30 for disposal provided with valve 31.

The circuit described can operate according to many operative modes, depending on the treatment the oil must be subjected to.

In particular, according to a first operative mode, called complete purification, it is possible to regenerate oil after a classical series of frying cycles, that is, instead of disposing oil, this operative mode is performed and the frying cycles are activated again, until a number of regenerations that can vary from 4 to 8 regeneration steps depending on the quality of the used oil.

Oil from fryer, by means of the three-way valve 14, arrives to the pump 16 and delivered to the first step of filtration (filter 22 for raw filtering). Oil then flows by means of the three-way valve 23, and by means of the conduit 24, to the second step of filtration (refining filter 27), arriving to the collecting tank 28.

According to this operative mode, valves 13, 25, 19 and 31 are shut, the temperature control unit 11 is excluded, the flow switch 18 for detecting the presence of oil is active, as well as the manostat 21 for the detection of a possible obstruction.

According to a second operative mode, called raw filtering, that can be repeated more times in a day, in order to clean oil from any residue from cooking food, oil from fryer tank 10, by means of the three-way valve 14, arrives to the pump 16 and is delivered to the first step of filtration (filter 22 for raw filtering). Then, oil goes on by means of the three-way valve 23, until going back by means of the conduit 20 into the fryer tank 10.

In this step valves 13, 25, 19 and 31 are shut. Further, the temperature control unit 11, the flow switch 18 for detecting the presence of oil and the manostat 21 for the detection of a possible obstruction are active.

If an obstruction is detected by the manostat 21, the filter 22 can be cleaned, even by hand.

According to a third operative mode, called ultra-filtration, that can be repeated after complete purification, in order to remove the most persistent smell, for example in order to allow for cooking fish with the same oil used for chips, oil from fryer tank 10, after arriving to the collecting tank 28, by means of the three-way valve 14, arrives to the pump 16, passing through the valve 25, and then back to the refining filter 27, arriving again to the collecting tank 28.

In this step, valves 13, 23, 19 and 31 are shut, the temperature control unit 11 is not active while the flow switch 18 for detecting the presence of oil and il manostat 26 for the detection of a possible obstruction del refining filter 27 are active.

If an obstruction is detected by the manostat 26, the filter 27 can be cleaned, also by hand.

The steps of co mplete purification an d ultra-filtration are further followed by a step of filtered oil restoration, allowing for taking back filtered oil directly to the fryer tank 10.

In this operative mode, oil from the collecting tank 28, by means of the three-way valve 14, arrives to the pump 16 and by means of the valve 19, directly goes back to fryer tank 10.

In this step, valves 13, 25, 23 and 31 are shut, the temperature control unit 11 and the flow switch 18 for detecting the presence of oil are active, while the manostat 21 for the detection of a possible obstruction is not active.

Last, the operative mode of oil disposal allows for removing, after all cycles are finished, oil from fryer and delivering it to disposal.

In this step, the oil of the fryer, by means of valve 13, falling down, is collected in a suitable container (not shown) and disposed. Further, in this step, the collecting duct for the deposits of the collecting tank 28 is emptied by hand.

In this step, valves 14, 25, 23, 19 and 31 are shut, electropump 16 is switched off, the temperature control unit 11, the flow switch 18 for detecting the presence of oil and manostats 21 and 26 for the detection of a possible obstruction are all inactive.

Also in this case, the whole apparatus is assisted by a control system comprising a redundant PLC system, managing all the set operative steps.

Set programs control operative cycles and security controls needed for a normal cooking. The fryer with controlled electric heating or methane/gas heating, manages, without any possibility of setting error, the cooking temperature.

The user is only requested for setting by means of a keyboard the cycle with the used oil, this parameter being constantly controlled by the PLC by means of the temperature control unit 11. The parameters, already set in the PLC, are as many as the possibly used vegetable oils.

Oil temperature control is a key aspect of both embodiments of the present invention.

In fact, various kinds of oil are in commerce, being different not only because of their origin and taste but also because of their nutritive and organoleptic features. Nutritionists advice not to exaggerate with frying cycles because high temperatures reached with this cooking method alter fats molecular structure, producing residues that are toxic for our organism.

These alterations also manifest at a physic level: an oil exposed to high temperature will take a darker and darker colour, producing foamy residues and increasing its viscosity.

Among the various oils on the market some are much more stable and resistant to high temperature and other decomposing more easily.

The formation of toxic substances depends on three main factors: the temperature and time of exposure to heat, the amount of polyunsaturated fat acids and the oil smoke point. In particular, oils containing a great amount of polyunsaturated fat acids must not be used for frying. Omega 3 fats, known for their usefulness in preventing cardiovascular disease, if subjected to high temperature become unstable producing residues that are toxic for our body.

The smoke point corresponds to the maximum temperature that can be reached by an oil before it starts burning and decomposing creating the toxic substances said above.

According to polls and interviews to restaurateurs, it was demonstrated that they do not know the temperature at which oil overpass the smoke point.

The apparatus is therefore provided for monitoring and managing all these cycles assuring non alteration of the molecules of a vegetable oil, managing the integrity of the molecule, the original viscosity, purity, and colour.

The present invention was described for illustrative, non limitative purpose, according to its preferred embodiment, but it has to be understood that variations and/or modifications can be made by the skilled in the art without for this reason escaping the scope of protection as defined by the enclosed claims.

## Claims

1. Automatic fryer provided with a regeneration system for cooking oil, comprising a tank (10) for cooking oil, provided with means for controlling the oil cooking temperature and with an outlet conduit (12) conducting to a pump (16) for pumping oil to a delivery conduit (17) and from the latter alternatively to a conduit (17a, 20, 40) for recycling to said tank (10), or to a conduit (17b, 24, 34) provided with one or more filters (22, 27, 32, 37) and subsequently followed by a collection tank (28) and by a conduit (29) for recycling to said pump (16), **characterised in that** said means for controlling the oil cooking temperature comprise a temperature control unit (11), plunged in said tank (10), means for selecting the kind of oil that is being used and means for controlling the frying temperature according to the selected kind of oil.

2. Automatic fryer provided with a regeneration system for cooking oil according to claim 1, **characterised in that** downstream said delivery conduit (17) a three-way valve (33) is provided, connected to a conduit (20) for recycling to said tank (10) and to a second conduit (34) provided with a first filter (32) for raw filtering and a second filter (37) for refining and subsequently followed by a collection tank (28) and by a conduit (29) for recycling to said pump (16).

3. Automatic fryer provided with a regeneration system for cooking oil according to claim 1, **characterised in that** downstream said delivery conduit (17) a first conduit (17a) is provided connected to a conduit (20) for recycling to said tank (10), a second conduit (17b) with a filter (22) for raw filtering, followed by a three-way valve (23) connected to said conduit (20) for recycling to said tank (10) and to a conduit (24) comprising a filter (27) for refining, or to a conduit (17c) for direct connection to said conduit (24) comprising said filter (27) for refining, said conduit (24) being subsequently followed by a collection tank (28) and by a conduit (29) for recycling to said pump (16).

4. Automatic fryer provided with a regeneration system for cooking oil according to any of claims 1 - 3, **characterised in that** it comprises a PLC for controlling the management of any set performing step.

## Patentansprüche

1. Automatische Friteuse, die mit einem Regenerationssystem für Kochöl versehen ist, umfassend einen Tank (10) für Kochöl, der mit Mitteln zum Steuern der Ölkochtemperatur versehen ist und mit einer Auslassleitung (12), die zu einer Pumpe (16) führt zum Pumpen von Öl zu einer Lieferleitung (17) und von letzterer alternativ zu einer Leitung (17a, 20, 40) zum Recyceln zu dem Tank (10) oder zu einer Leitung (17b, 24, 34), die mit einem oder mehreren Filtern (22, 27, 32, 37) versehen ist und die anschließend von einem Sammeltank (28) gefolgt wird und von einer Leitung (29) zum Recyceln zu der Pumpe (16), **dadurch gekennzeichnet, dass** das Mittel zum Steuern der Ölkochtemperatur eine in den Tank (10) eingetauchte Temperatursteuereinheit (11), Mittel zum Auswählen der Art des verwendeten Öls und Mittel zum Steuern der Frittiertemperatur entsprechend der ausgewählten Ölart aufweist.

2. Automatische Friteuse, die mit einem Regenerationssystem für Kochöl gemäß Anspruch 1 versehen ist, **dadurch gekennzeichnet, dass** stromabwärts der Lieferleitung (17) ein Dreiwegeventil (33) vorgesehen ist, das verbunden ist mit einer Leitung (20) zum Recyceln zu dem Tank (10) und mit einer zweiten Leitung (34), die mit einem ersten Filter (32) zur Rohfilterung und einem zweiten Filter (37) zum Verfeinern und anschließend gefolgt von einem Sammeltank (28) und mittels einer Leitung (29) zum Recyceln zu der Pumpe (16).

3. Automatische Friteuse, die mit einem Regenerationssystem für Kochöl gemäß Anspruch 1 versehen ist, **dadurch gekennzeichnet, dass** stromabwärts der Lieferleitung (17) eine erste Leitung (17a) vorgesehen ist, die verbunden ist mit einer Leitung (20) zum Recyceln zu dem Tank (10) einer zweiten Leitung (17b) mit einem Filter (22) zur Rohfilterung, gefolgt von einem Dreiwegeventil (23), das mit der Leitung (20) verbunden ist zum Recyceln zu dem Tank (10) und mit einer Leitung (24), die ein Filter (27) zur Verfeinerung aufweist oder zu einer Leitung (17c) zur direkten Verbindung mit der Leitung (24), die den Filter (27) zur Verfeinerung aufweist, wobei die Leitung (24) anschließend gefolgt ist von einem Sammeltank (28) und von einer Leitung (29) zum Recyceln der Pumpe (16).

4. Automatische Friteuse, die mit einem Regenerationssystem für Kochöl gemäß einem der Ansprüche 1 - 3 versehen ist, **dadurch gekennzeichnet, dass** sie einen PLC aufweist zum Steuern des Managements von irgendeinem gesetzten Ausführungsschritt.

## Revendications

1. Friteuse automatique munie d'un système de régénération pour huile de cuisson, comprenant un réservoir (10) pour huile de cuisson, muni de moyens pour réguler la température de cuisson de l'huile et d'un conduit de sortie (12) menant à une pompe (16) pour pomper de l'huile vers un conduit de délivrance (17), et, à partir de ce dernier, soit vers un conduit (17a, 20, 40) pour le recyclage vers ledit réservoir (10), soit vers un conduit (17b, 24, 34) muni d'un ou de plusieurs filtres (22, 27, 32, 37), et suivi ensuite par un réservoir de collecte (28) et par un conduit (29) pour le recyclage vers ladite pompe (16), **caractérisée en ce que** lesdits moyens pour réguler la température de cuisson de l'huile comprennent une unité de régulation de température (11), plongée dans ledit réservoir (10), des moyens pour sélectionner le type d'huile qui est utilisée et des moyens pour commander la température de friture en fonction du type d'huile sélectionné.

2. Friteuse automatique munie d'un système de régénération pour huile de cuisson selon la revendication 1, **caractérisée en ce que**, en aval dudit conduit de délivrance (17), une vanne à trois voies (33) est disposée, reliée à un conduit (20) pour le recyclage vers ledit réservoir (10) et à un deuxième conduit (34) muni d'un premier filtre (32) pour le filtrage brut et d'un deuxième filtre (37) pour le raffinage, et suivis ensuite par un réservoir de collecte (28) et par un conduit (29) pour le recyclage vers ladite pompe (16).

3. Friteuse automatique munie d'un système de régénération pour huile de cuisson selon la revendication 1, **caractérisée en ce que**, en aval dudit conduit de délivrance (17), un premier conduit (17a) est disposé, relié à un conduit (20) pour le recyclage vers ledit réservoir (10), un deuxième conduit (17b) avec un filtre (22) pour le filtrage brut, suivi par une vanne à trois voies (23) reliée audit conduit (20) pour le recyclage vers ledit réservoir (10) et à un conduit (24) comprenant un filtre (27) pour le raffinage, ou à un conduit (17c) pour le raccordement direct audit conduit (24) comprenant ledit filtre (27) pour le raffinage, ledit conduit (24) étant ensuite suivi par un réservoir de collecte (28) et par un conduit (29) pour le recyclage vers ladite pompe (16).

4. Friteuse automatique munie d'un système de régénération pour huile de cuisson selon l'une quelconque des revendications 1 à 3, **caractérisée en ce qu'**elle comprend un dispositif de commande logique programmable pour commander la gestion de n'importe quelle étape d'exécution établie.
